# EUROPEAN PATENT APPLICATION

(11) **EP 4 195 589 A2**
(43) Date of publication of application: **14.06.2023**
(21) Application number: 22212259.0
(22) Date of filing: 08.12.2022
(51) Int. Cl.: H04L 9/32, G06F 11/10, G06F 21/64, H04L 9/06

(54) **CHECKSUM GENERATOR AND VERIFICATION SYSTEM**

(30) Priority: 10.12.2021 US 202117547935
(71) Applicant: Cohen, Royi, 2069221 Yoqneam Illit (IL); Zahavi, Avi Dov, 6937937 Tel Aviv (IL); Cohen, Eddie, West Hills, CA 91304 (US); Shabat, Jacob, 1426101 Tiberias (IL); Kook, Shmuel Natan, 1422229 Tiberias (IL)
(72) Inventor: COHEN, Royi, 2069221 Yoqneam Illit (IL)
(74) Representative: Beck & Rössig European Patent Attorneys

(57) **Abstract**

A checksum generator of a data matrix is provided that comprises counting at least one of:
the numerals "0" and "1" in at least one row of the data matrix so that the number of appearances of each numeral is sequentially placed,
the numerals "0" and "1" in at least one column of the data matrix so that the number of appearances of each numeral is sequentially placed,
the numerals "0" and "1" in at least one left diagonal of the data matrix so that the number of appearances of each numeral is sequentially placed, and
the numerals "0" and "1" in at least one right diagonal of the data matrix so that the number of appearances of each numeral is sequentially placed.

The method further comprises ordering the number of appearances of each numeral to form a key and sequentially positioning the key so as to assemble the checksum. In addition, counting the numerals "0" and "1" is performed in a predetermined order. Further provided are methods of implementing the checksum generated according to the counting method.

## Description

### TECHNICAL FIELD

The present disclosed subject matter relates to checksum generators. More particularly, the present subject matter related to generating checksum for verifying a data source.

### BACKGROUND

The integrity of data that is received from a source is extremely important, especially in a world that becomes more and more dependent on data received in binary form from different sources. Data integrity uses traditional hash functions that can be used to map data of arbitrary size to fixed-size values. Traditional hash functions are used in the art, however, there are several disadvantages to using the hash function:

1. Traditional hash functions require the use of mathematical functions-(+, -. *, /) and/or calculations.

2. Traditional hash functions require large computational resources due to the use of mathematical functions and/or calculations.

3. Traditional hash functions can be defeated using brute-force computation (which currently require large "super computer", but in the future will be easily defeated by quantum-computing).

The inventor of the present subject matter attributes the vulnerability (mathematical and/or quantum attack) of traditional hash functions as a means for data integrity verification to the fact that mathematical functions and/or calculations are used. There is a need for a data integrity system that is reliable and can be trusted.

### BRIEF SUMMARY

It is an object of the present subject matter to provide a method of generating a checksum of a data matrix comprising:
counting at least one of:
   the numerals "0" and " 1" in at least one row of the data matrix so that the number of appearances of each numeral is sequentially placed,
      the numerals "0" and "1" in at least one column of the data matrix so that the number of appearances of each numeral is sequentially placed,
   the numerals "0" and "1" in at least one left diagonal of the data matrix so that the number of appearances of each numeral is sequentially placed, and
   the numerals "0" and "1" in at least one right diagonal of the data matrix so that the number of appearances of each numeral is sequentially placed;
ordering the number of appearances of each numeral to form a key;
sequentially positioning the key so as to assemble the checksum.

In accordance with another embodiment of the present subject matter, counting the numerals "0" and "1" is performed in a predetermined order.

In accordance with another embodiment of the present subject matter, the predetermined order is defined by at least one of a user or a processor on which the checksum is generated.

In accordance with another embodiment of the present subject matter, the key comprises at least one of:
a row key formed from ordering the number of appearances of each numeral of the at least one row;
a column key formed from ordering the number of appearances of each numeral of the at least one column;
a left diagonal key formed from ordering the number of appearances of each numeral of at the least one left diagonal;
a right diagonal key formed from ordering the number of appearances of each numeral of the at least one right diagonal.

In accordance with another embodiment of the present subject matter, the method further comprises performing a XOR operator on the checksum.

In accordance with another embodiment of the present subject matter, the method further comprises performing a XNOR operator on the checksum.

In accordance with another embodiment of the present subject matter, the method further comprises performing a XOR and a XNOR operators on the checksum.

In accordance with another embodiment of the present subject matter, the method further comprises padding the checksum with either predefined or random data.

In accordance with another embodiment of the present subject matter, the data matrix is converted from data source selected from a group of data sources consisting of document, calculation, a password, a list, an audio, a video, a digital file, a communication stream, a predefined source, a random generator source, or the like.

In accordance with another embodiment of the present subject matter, the data source is divided into at least two data portions and wherein each data portion is converted into a matrix from which a checksum is formed.

In accordance with another embodiment of the present subject matter, the format of the data matrix is a format selected from a group of formats consisting of binary, decimal, hexadecimal, octal, ASCII, a combination thereof, or the like.

In accordance with another aspect of the present subject matter, it is provided a method of logging in a website comprising:
receiving, from a server, a login checksum of a user;
presenting by the server, a list of authorized websites;
choosing by the user, a specific website;
generating, by the specific website, a one-time password (OTP) string;
dividing the OTP string to a first OTP string portion and a second OTP string portion;
receiving by the user the first OTP string portion;
receiving by the server the second OTP string portion from the specific website and the first OTP string portion from the user;
receiving by the server a specific website checksum;
forming by the server a new checksum from the first OTP string portion, the second OTP string portion, and the specific website checksum;
receiving by specific website the new checksum;
allowing the user to login the specific website in case the new checksum is verified.

In accordance with another embodiment of the present subject matter, the new checksum is verified by comparing the new checksum with the server checksum or any other predefined key.

In accordance with another embodiment of the present subject matter, the method further comprises:
forming by the server a one-time password (OTP);
validating the user by the server using user's information;
forming a login checksum based on the OTP and the user's information.

In accordance with yet another aspect of the present subject matter, it is further provided a method for signing a file comprising:
logging into the specific website configured to allow at least one user to sign files using the method disclosed herein;
creating a file to be signed by the at least one user;
sending the file to the at least one user;
logging into the file through the specific website;
authenticating each of the at least one user;
opening the file;
adding a signature of each one of the users to the file and create a signed file; in case all the users signed the file, creating a checksum for the file;
sending the signed file with the checksum to the at least one user.

In accordance with another embodiment of the present subject matter, the method further comprises taking a photo of the at least one user's face and/or ID by the at least one user and sending the photo to the specific website.

In accordance with another embodiment of the present subject matter, the method further comprises creating a data capacitor selected from a group consisting of a barcode, a machine-readable code, a near field communication chip (NFC), a combination thereof or the like to secure the file.

In accordance with another embodiment of the present subject matter, the method further comprises setting a location in which signatures are added.

Unless otherwise defined, all technical and scientific terms used herein have the same meaning as commonly understood by one of ordinary skill in the art to which this disclosed subject matter belongs. Although methods and materials similar or equivalent to those described herein can be used in the practice or testing of the present disclosed subject matter, suitable methods and materials are described below. In case of conflict, the specification, including definitions, will control. In addition, the materials, methods, and examples are illustrative only and not intended to be limiting.

### BRIEF DESCRIPTION OF THE DRAWINGS

Some embodiments of the disclosed subject matter described, by way of example only, with reference to the accompanying drawings. With specific reference now to the drawings in detail, it is stressed that the particulars shown are by way of example and for purposes of illustrative discussion of the preferred embodiments of the present disclosed subject matter only, and are presented in the cause of providing what is believed to be the most useful and readily understood description of the principles and conceptual aspects of the disclosed subject matter. In this regard, no attempt is made to show structural details of the disclosed subject matter in more detail than is necessary for a fundamental understanding of the disclosed subject matter. The description taken with the drawings making apparent to those skilled in the art how the several forms of the disclosed subject matter may be embodied in practice.

In the drawings:
Figure 1 schematically illustrates a checksum generator in accordance with some exemplary embodiments of the disclosed subject matter.
Figure 2 illustrates a system for verifying a data source in accordance with some exemplary embodiments of the disclosed subject matter.
Figure 3 depicts a flow chart diagram of the actions performed by an authentication authorization access (AAA) server as a checksum generator, in accordance with some exemplary embodiments of the disclosed subject matter.
Figure 4 depicts a flow chart of login of a user to the system for authenticating the user, in accordance with some exemplary embodiments of the disclosed subject matter.
Figure 5 depicts a flow chart of an application by which a document is being signed by several recipients, in accordance with some exemplary embodiments of the disclosed subject matter.
Figure 6 depicts a flow chart of the application shown in Figure 5 in another branch of the diagram, in accordance with some exemplary embodiments of the disclosed subject matter.

### DETAILED DESCRIPTION

Before explaining at least one embodiment of the disclosed subject matter in detail, it is to be understood that the disclosed subject matter is not limited in its application to the details of construction and the arrangement of the components set forth in the following description or illustrated in the drawings. The disclosed subject matter is capable of other embodiments or of being practiced or carried out in various ways. Also, it is to be understood that the phraseology and terminology employed herein is for the purpose of description and should not be regarded as limiting. The drawings are generally not to scale. For clarity, non-essential elements were omitted from some of the drawings.

The terms "comprises", "comprising", "includes", "including", and "having" together with their conjugates mean "including but not limited to". The term "consisting of" has the same meaning as "including and limited to".

The term "consisting essentially of" means that the composition, method, or structure may include additional ingredients, steps and/or parts, but only if the additional ingredients, steps and/or parts do not materially alter the basic and novel characteristics of the claimed composition, method, or structure.

As used herein, the singular form "a", "an" and "the" include plural references unless the context clearly dictates otherwise. For example, the term "a compound" or "at least one compound" may include a plurality of compounds, including mixtures thereof.

Throughout this application, various embodiments of this disclosed subject matter may be presented in a range format. It should be understood that the description in range format is merely for convenience and brevity and should not be construed as an inflexible limitation on the scope of the disclosed subject matter. Accordingly, the description of a range should be considered to have specifically disclosed all the possible sub-ranges as well as individual numerical values within that range.

It is appreciated that certain features of the disclosed subject matter, which are, for clarity, described in the context of separate embodiments, may also be provided in combination in a single embodiment. Conversely, various features of the disclosed subject matter, which are, for brevity, described in the context of a single embodiment, may also be provided separately or in any suitable sub-combination or as suitable in any other described embodiment of the disclosed subject matter. Certain features described in the context of various embodiments are not to be considered essential features of those embodiments, unless the embodiment is inoperative without those elements.

It is an object of the present subject matter to provide a checksum generator that is not based on mathematical functions and/or calculations as some of the prior arts do, and therefore is not prone to external intervention and tampering.

It is an object of the present subject matter to provide method of generating a checksum of a data matrix that comprises counting at least one of:
the numerals "0" and "1" in at least one row of the matrix so that the number of appearances of each numeral is sequentially placed
the numerals "0" and "1" in at least one column of the matrix so that the number of appearances of each numeral is sequentially placed,
the numerals "0" and "1" in at least one left diagonal of the matrix so that the number of appearances of each numeral is sequentially placed, and
the numerals "0" and "1" in at least one right diagonal of the matrix so that the number of appearances of each numeral is sequentially placed.

The method then further comprises ordering the number of appearances of each numeral or data to form a key and sequentially positioning the key so as to assemble the checksum.

Alternatively in accordance with another embodiment, counting the numerals "0" and "1" is performed in a predetermined order. This order is to be predetermined by the user of the method or by the processor onto which the method is performed.

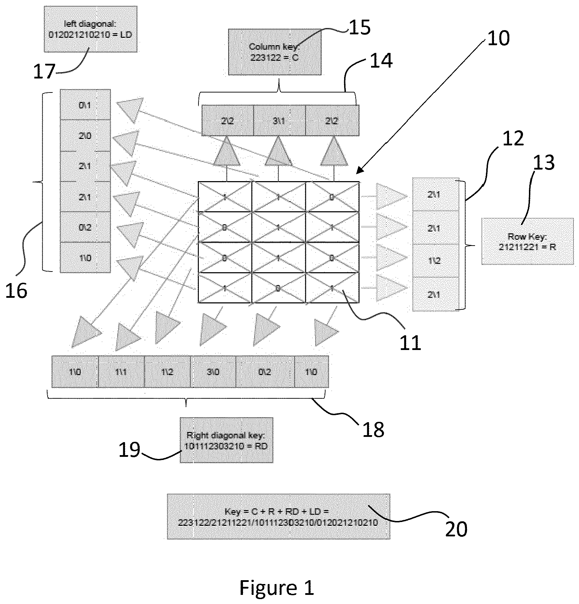

Referring now to Figure 1, schematically illustrating a checksum generator, in accordance with some exemplary embodiments of the disclosed subject matter.

Information is transformed into a matrix of binary values 10. The information can be any source of data such as a document, a formula, streamed media such as audio or video, speech data, data transmitted between computers or hand-held devices, any digital file, a combination thereof and the like. The binary matrix 10 can be of any number of cells 11, each with a numeral "0" or "1", depending on the size of the data source. Optionally, the data source can be divided into several data portions and the procedure is to be performed on each of the data portion.

Optionally or alternatively, the data or information matrix can be in a format that is binary as shown herein the preferred embodiment, however, it can be also formatted to be in a decimal, hexadecimal, octal, ASCII formats, a combination thereof, or the like.

It is preferable to form a square matrix wherein the height and the width of the matrix are the same. However, this is not mandatory and in the present example, this is not the case.

After establishing the matrix 10, counting of the numerals "0" and " 1" is performed in the following manner:

The number of numerals "0" and " 1" is counted in each row - in the present example, four rows 12, each having three cells, that as are counted so that in the first row there are two "1" and a single "0" indicated as 2\1. The second row is counted to have also two "1" and a single "0" indicated as 2\1. The order of the numerals within the row has no significance. In the third row, there is a single "1" and two "0" indicated as 1\2. And the fourth row is indicated to be also 2\1 to indicate two "1" and a single "0". A row key 13 indicated by the letter R is therefore, 21211221, accordingly.

Then, the same is performed in the three columns 14 of the matrix 10 - the first column counts have two "1" and two "0" to be indicated as 2\2, the second column has three "1" and 1 "0" to be 3\1 and the third column has two "1" and two "0" to be indicated as 2\2. Also for this case, the order of the numerals has no significance. A column key 15 indicated by the letter C is therefore, 223122, accordingly.

Now, the same procedure is performed for the diagonals - as for the left diagonal, there are 6 diagonals 16. The first diagonal comprises only one cell (upper right corner) that counts for zero "1" and a single "0" that is indicated as 0\1. The second diagonal has two "1" and no "0" to be indicated as 2\0. In the third left diagonal, there is a count of two "1" and a single "0" to be indicated as 2\1. The fourth left diagonal is counted the same as the third and therefore, indicated as 2\1, as well. The fifth diagonal has no "1" and two "0" and therefore, to be indicated as 0\2. The sixth and last left diagonal is again a single cell with the numeral "1" and therefore, indicated as 1\0. A left diagonal key 17, indicated by the letters LD, is established from those specific indications and reads as 012021210210.

As for the right diagonal, there are 6 diagonals 18. The first diagonal comprises only one cell (upper left corner) that counts for a single "1" and no "0" that is indicated as 1\0. The second diagonal has a single "1" and a single "0" to be indicated as 1\1. In the third right diagonal, there is a count of a single "1" and a two "0" to be indicated as 1\2. The fourth right diagonal is counted for 3 "1" and no "0", and therefore, indicated as 3\0. The fifth diagonal has no "1" and two "0" and therefore, to be indicated as 0\2. The sixth and last right diagonal is again a single cell (lower right cell) with the numeral "1" and therefore, indicated as 1\0. A right diagonal key 18, indicated by the letters RD, is established from those specific indications and reads as 101112303210.

It should be noted that not all the rows, columns, or diagonals are to be counted. The user of the checksum generator can be predefined so that only one or several of the rows, columns or diagonals are to be counted.

All the keys are placed one besides the other to create a long string of numbers comprising the keys in a specific order KEY - column key C 15, row key R 13, right diagonal key RD 19, and the left diagonal key LD 17. KEY, for this specific example, is the string of numbers 223122/21211221/101112303210/012021210210. This is the formed checksum 20 that the checksum generator creates from counting the binary numerals.

Since the string of numbers in the keys can be very long, a XOR and/or XNOR operator is performed on the numbers. This can be performed between the keys or in a key itself.

This unique key is unique for the specific data source from which it was generated. Optionally, padding is possible before or after the operator XOR and/or XNOR is applied.

The checksum according to the method of the present subject matter is made within a system for verifying a document.

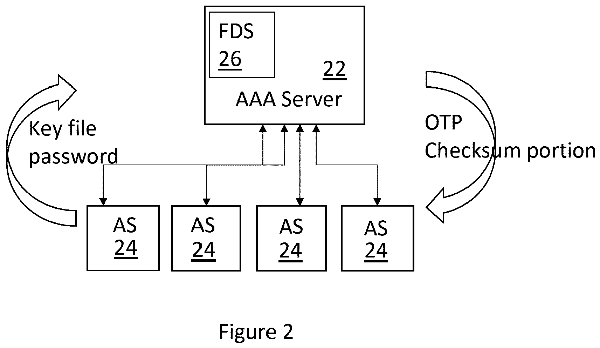

Reference is now made to Figure 2 illustrating a system for verifying a data source, in accordance with some exemplary embodiments of the disclosed subject matter.

The system's main server is an authentication authorization access server (AAA server) 22 that is configured to connect to authorized sites (AS) 24 that are used by the users of the system using a personal computer, hand-held devices, a combination thereof, or the like. The connection protocol between the AAA server and the AS of the users is based on a site-to-site or IP-to-IP connection such as virtual private network (VPN), so the connection between the users and the AAA server is totally private and cannot be tampered by a third party. The AAA server 22 divides the checksum 20 or a derivative thereof to two halves while one portion is transferred to the user and the other portion is kept in the server.

The system further comprises a file directory server (FDS) 26 that optionally is a part of the AAA server 22. The FDS 26 creates a unique file for each user that comprises the portion of the checksum 20 (shown in Figure 1) that was kept in the AAA server. The communication between the AAA server 22 and the authorized sites 24 (the users) is direct and comprises information such as key files, passwords, one time password (OTP), checksum portion, a combination thereof and the like.

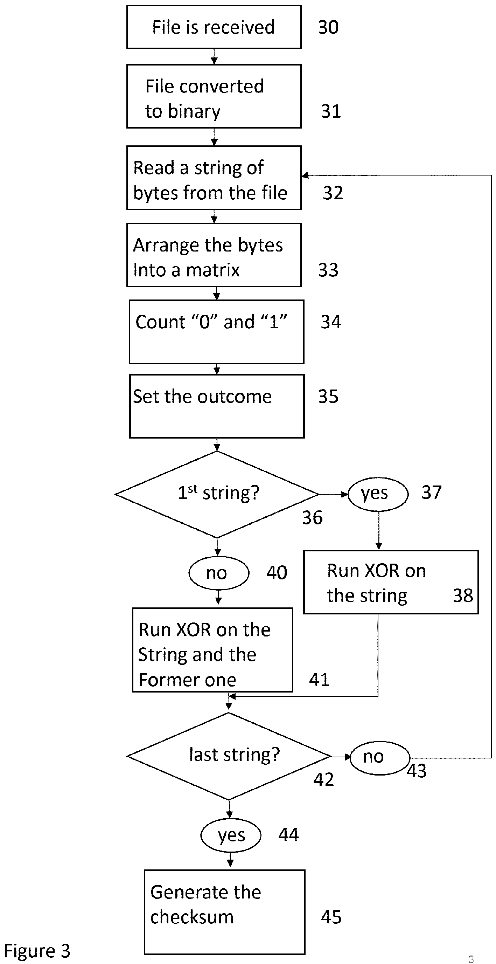

Following are flow charts (Figures 3-6) according which the method is implemented by the user or the servers.

Reference is now made to Figure 3 depicting a flow chart diagram of the actions performed by the AAA server as a checksum generator, in accordance with some exemplary embodiments of the disclosed subject matter.

A file is received by the AAA server 30 wherein the file can be a document, calculation, a password, a list, an audio, a video, any digital file, a communication stream, a combination thereof, and the like. The file is then converted into a binary file 31 in which only the numerals "0" and "1" are present. The AAA server then reads a 1^{st} string of bytes 32 formed of any number of bytes (x) that is dependent on the size of the file and its character. The bytes of "1" and "0" are arranged within a matrix 33.

After the matrix is arranged, the "0" and "1" are counted according to the method that is shown in Figure 1. The generator is counting the appearance of "0" and "1" in the rows, in the columns, in the left and right diagonals, as shown in the example of Figure 1. The result of the count is setting an outcome of numbers 35 that represents the numbers of "0" and "1" in the matrix (KEN 20 in figure 1).

Then, the AAA server checks whether the string is the first string 36. In case this is the first string, the answer is yes 37, a XOR and/or XNOR function is performed on the string with itself 38. In case this is not the first string and the answer is no 40, the XOR and/or XNOR function is performed on the string and the former one 41. The AAA server now checks, for both cases, whether the string is the last one 42. If this is indeed the last string and the answer is yes 44, the checksum is generated from all strings. If the answer is no 43, and there are more strings to be organized and counted, the flow goes back to the step in which the strings are read from the file 32.

As mentioned herein before, the checksum generator is activated in the AAA server or in any other server or device that has the ability to process data.

Optionally and additionally, before reading the string of bytes, additional data can be added to the file. This data, provided by the user, can be a password, a key, salting, or any other data that will enhance the privacy of the user and the integrity of the resulted checksum.

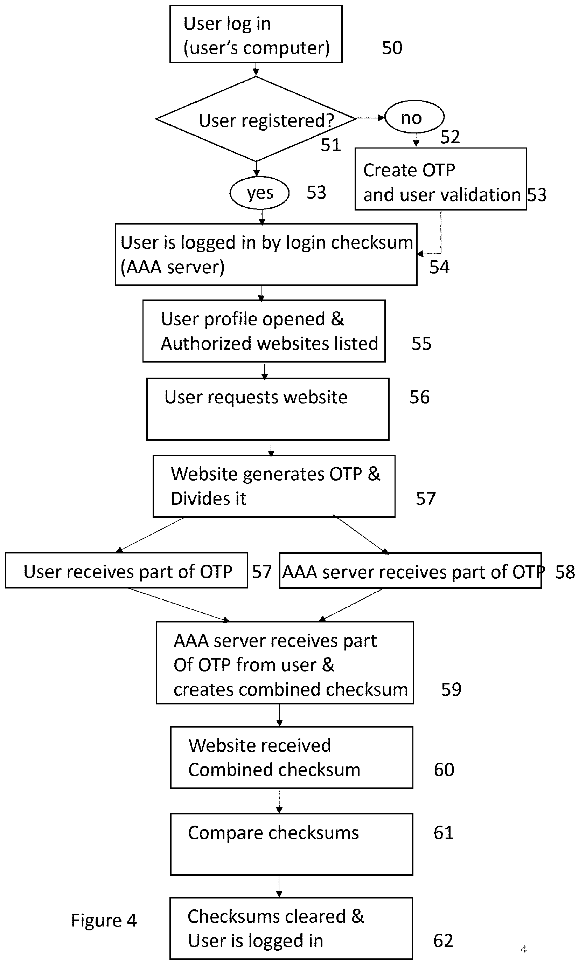

Reference is now made to Figure 4 depicting a flow chart of login of a user to the system for authenticating the user, in accordance with some exemplary embodiments of the disclosed subject matter.

The user is logged into the system 50 from their personal computer. There are two possibilities to login. The system checks whether the user is a registered user 51. If the user is not registered 52, there is a possibility to create a one-time password (OTP) and validate the user 53 so as to be able to login the user using his information and the OTP that from a login checksum 54. If the user is a registered user 53, he is logged in immediately and a checksum is formed for this entry to the system 54. The login checksum, which is a dedicated and unique checksum, whether from a registered user or the random one is formed within the AAA server.

The user's profile on the AAA server presents a list of authorized websites 55. The user then requests a login request for a specific website from the list of websites, and the AAA serves passes to it the unique and dedicated checksum 56.

The website then generates an OTP preferably having 8 characters and divides the OTP into two portions, preferably each having 4 characters 57. The website sends four characters of the OTP to the user 57 and the other four characters to the AAA Server 58 via a VPN channel. It should be mentioned that the OTP can be made of any number of characters and can be divided in any ratio without limiting the scope of the present subject matter.

The user then sends part of the OTP with the 4 characters to the AAA Server. The AAA server receives the part of the OTP from the user and creates a new combined checksum from the full OTP number 59.

The AAA server sends the combined checksum to the server of the dedicated website 60. The website that received the combined checksum compares 61 the checksum from the AAA Server and the new checksum of the website that is created from the checksum at the website and the OTP number

Optionally and in accordance with another embodiment, the AAA server communicates with the website allowing full access to services.

Optionally and according to yet another embodiment, the user has two parts of the checksum with one transmitted to the AAA server and the other transmitted to the website. The AAA server then performs an authentication with the website allowing the user to login.

If the comparison creates a valid checksum, the user is logged into the website 62.

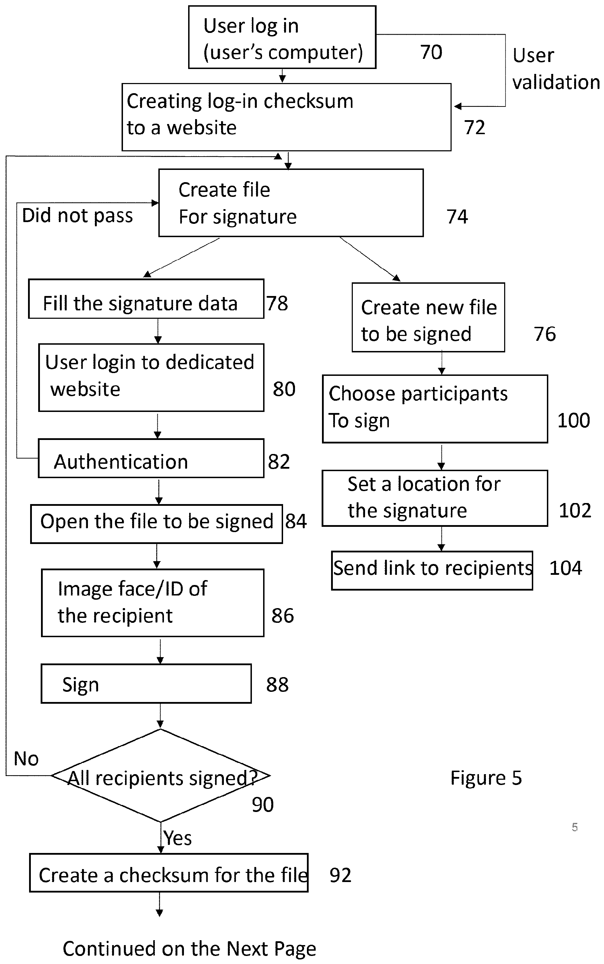

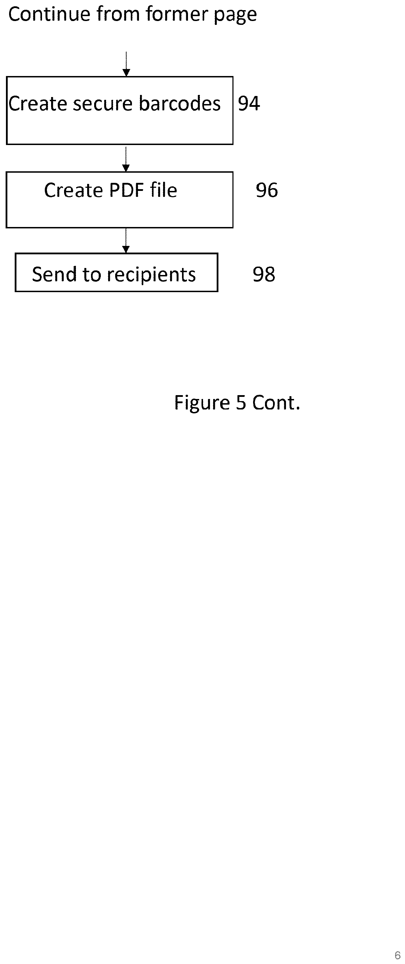

Reference is now made to Figure 5 depicting a flow chart of an application by which a document is being signed by several recipients, in accordance with some exemplary embodiments of the disclosed subject matter.

In Figure 5, a method of verifying a document and signing it by several recipients using the checksum generator of the present subject matter is presented. The user first logs in as explained in Figure 4, as an example, on the user's computer 70. The users can login with their own OTP or through a user validation where they can get an OTP, wherein the OTP and the log in information creates a login checksum to a specific website 72. In the website, a file is created or downloaded by a user so as to be signed 74. Two branches are now possible as follows:

In accordance with the first branch which will be discussed herein after, a new file for signature is created 76 (right hand side wing), while in the other route (left hand side wing), signature data such as graphical signature, a digital signature (string of data), a combination thereof or the like is to be filed by the user 78

Continuing in the left-hand wing, after the data is filed, the user logs into a dedicated website through a link they received by any means of communication 80 such as an e-mail. This communication can be sent directly by the user that generated the document and wanted it to be singed or through step 104 that will be discussed herein after. The user is then authenticated 82 on the AAA server and checked to be included with the participants that are listed to sign the current document. The authentication can comprise several authenticated items such as the user himself, the process, the document, the data, a combination thereof, or the like. In case that one of these do not pass the authentication, the process is halted and the initiator and/or all relevant parties to the document are notified.

The system then returns to step 74 in which the file for signature is created. If the user passes the authentication process, the file is opened 84 for them to sign.

In addition, the system requires a live picture of their face or other form of biometric identification and Government Issued ID of the recipient 86 as an additional security layer, and only then, the signature is placed 88 in the dedicated position of the document. Now, when the user that signed the document has finished the signing process, the system checks whether all the recipients signed the document 90. In case the document was not signed by all the participants, the system reverts back to start again from box 74 with the other participants. If all participants signed the document, a checksum is created 92 from the file containing the properly signed document. The checksum is created using the checksum generator of the present subject matter.

Secured barcodes, machine readable codes, NFC, or other data capacitor(s) are created 94 for the file. In an event of cyber-attack, ransomware, data loss, a combination thereof or the like, the barcodes, machine readable codes, NFC, or other data capacitor(s) serve as a method to allow the user(s) to scan a paper/physical copy of a digitally signed document and verify its authenticity. Furthermore, scanning the barcodes, machine readable codes, NFC, or other data capacitor(s) will enable the user(s) to reconstruct the digitally signed document into a .pdf, .doc., .docx, or any other digital data formats.

Optionally, the barcode can be replaced with another data capacitor such as machine-readable code, a near field communication chip (NFC), a combination thereof or the like so as to secure the file.

A PDF file is formed 96 from the document carrying the signatures of all participants, with the barcodes and the checksum. The complete PDF file is sent to the participants by email 98 or any other method of delivering a message containing a file.

Returning now to the right-hand side of the flow chart - after a new file is created and to be signed 76, the user that needs the document to be signed determines and enters to the system a list of participants that should sign the document 100. The location of the signature on the document is being set 102 and a link is sent to the participants 104. The participants can now continue with signing the document.

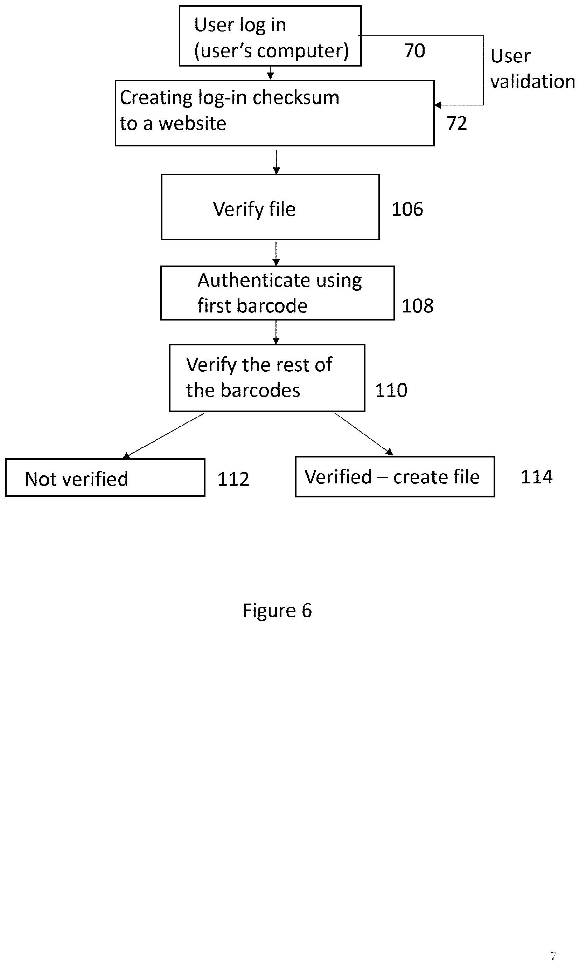

Reference is now made to Figure 6 depicting a flow chart of the application shown in Figure 5 in another route, in accordance with some exemplary embodiments of the disclosed subject matter.

According to Figure 6, a method of verifying and authenticating a document (file) is presented. The user first logs in as explained in Figure 4, as an example, on the user's computer 70. The user can login with their own OTP or through a user validation where they can get an OTP wherein the OTP and the log in information is creating a login checksum to a specific website 72. The procedure of verifying a file 106 starts. A first barcode is read 108 so as to authenticate the checksum of the file. The barcode is created by the system once the initiator of the document (the user) has completed the process of reading a document for signature. The first barcode contains the instructions to process the authentication of the present document.

The rest of the barcodes are read and verified 110.

Two options are now available: if the barcodes and the checksum are verified, a file is generated 114. The barcodes can extract the original and duly executed (signed) file. The first file contains the original file and the barcodes. After reading the barcodes, the service generates the original file from the barcodes.

If the barcode or the checksum is not verified 112, the recipient is informed and the data that is provided in the barcodes is deleted.

The present disclosed subject matter may be a system, a method, and/or a computer program product. The computer program product may include a computer readable storage medium (or media) having computer readable program instructions thereon for causing a processor to carry out aspects of the present disclosed subject matter.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, near field communication chip (NFC) and/or the like, a physical paper which can be printed with a machine readable code that can store the file and can be presented by the embodiment of the invention, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network, and/or satellite network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present disclosed subject matter may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosed subject matter.

Aspects of the present disclosed subject matter are described herein with reference to flowchart illustrations and/or block diagrams of methods, apparatus (systems), and computer program products according to embodiments of the disclosed subject matter. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present disclosed subject matter. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The terminology used herein is for the purpose of describing particular embodiments only and is not intended to be limiting of the disclosed subject matter. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present disclosed subject matter has been presented for purposes of illustration and description, but is not intended to be exhaustive or limited to the disclosed subject matter in the form disclosed. Many modifications and variations will be apparent to those of ordinary skill in the art without departing from the scope and spirit of the disclosed subject matter. The embodiment was chosen and described in order to best explain the principles of the disclosed subject matter and the practical application, and to enable others of ordinary skill in the art to understand the disclosed subject matter for various embodiments with various modifications as are suited to the particular use contemplated.

## Claims

1. A method of generating a checksum of a data matrix comprising:
counting at least one of:
the numerals "0" and "1" in at least one row of the data matrix so that the number of appearances of each numeral is sequentially placed,
the numerals "0" and "1" in at least one column of the data matrix so that the number of appearances of each numeral is sequentially placed,
the numerals "0" and "1" in at least one left diagonal of the data matrix so that the number of appearances of each numeral is sequentially placed, and
the numerals "0" and "1" in at least one right diagonal of the data matrix so that the number of appearances of each numeral is sequentially placed;
ordering the number of appearances of each numeral to form a key; and
sequentially positioning the key so as to assemble the checksum.

2. The method as claimed in claim 1, wherein counting the numerals "0" and "1" is performed in a predetermined order.

3. The method as claimed in claim 2, wherein the predetermined order is defined by at least one of a user or a processor on which the checksum is generated.

4. The method as claimed in one of claims 1 to 3, wherein the key comprises at least one of:
a row key formed from ordering the number of appearances of each numeral of the at least one row;
a column key formed from ordering the number of appearances of each numeral of the at least one column;
a left diagonal key formed from ordering the number of appearances of each numeral of at the least one left diagonal; and
a right diagonal key formed from ordering the number of appearances of each numeral of the at least one right diagonal.

5. The method as claimed in one of claims 1 to 4, further comprising performing a XOR operator and/or an XNOR operator on the checksum.

6. The method as claimed in one of claims 1 to 5, further comprising padding the checksum with either predefined or random data.

7. The method as claimed in one of claims 1 to 6, wherein the data matrix is converted from data source selected from a group of data sources consisting of document, calculation, a password, a list, an audio, a video, a digital file, a communication stream, a predefined source, and/or a random generator source.

8. The method as claimed in claim 7, wherein the data source is divided into at least two data portions and wherein each data portion is converted into a matrix from which a checksum is formed.

9. The method as claimed in one of claims 1 to 8, wherein the format of the data matrix is a format selected from a group of formats consisting of binary, decimal, hexadecimal, octal, ASCII, a combination thereof, and the like.

10. A method of logging in a website comprising:
receiving, from a server, a login checksum of a user;
presenting by the server, a list of authorized websites;
choosing by the user, a specific website;
generating, by the specific website, a one-time password (OTP) string;
dividing the OTP string to a first OTP string portion and a second OTP string portion;
receiving by the user the first OTP string portion;
receiving by the server the second OTP string portion from the specific website and the first OTP string portion from the user;
receiving by the server a specific website checksum;
forming by the server a new checksum from the first OTP string portion, the second OTP string portion, and the specific website checksum;
receiving by specific website the new checksum; and
allowing the user to login the specific website in case the new checksum is verified.

11. The method as claimed in claim 10, wherein the new checksum is verified by comparing the new checksum with the server checksum or any other predefined key.

12. The method as claimed in claim 10 or 11, further comprising:
forming by the server a one-time password (OTP);
validating the user by the server using user's information; and
forming a login checksum based on the OTP and the user's information.

13. A method for signing a file comprising:
logging into the specific website configured to allow at least one user to sign files using the method as claimed in one of claims 10 to 12;
creating a file to be signed by the at least one user;
sending the file to the at least one user;
logging into the file through the specific website;
authenticating each of the at least one user;
opening the file;
adding a signature of each one of the users to the file and create a signed file;
in case all the users signed the file, creating a checksum for the file;
sending the signed file with the checksum to the at least one user.

14. The method as claimed in claim 13, further comprising taking a photo of the at least one user's face and/or ID by the at least one user and sending the photo to the specific website.

15. The method as claimed in claim 13 or 14, further comprising
creating a data capacitor selected from a group consisting of a barcode, a machine-readable code, a near field communication chip (NFC), a combination thereof or the like to secure the file;
and/or
setting a location in which signatures are added.
